# EUROPÄISCHE PATENTANMELDUNG

(11) **EP 1 892 154 A1**
(43) Veröffentlichungstag der Anmeldung: **27.02.2008**
(21) Anmeldenummer: 06119428.8
(22) Anmeldetag: 23.08.2006
(51) Int. Cl.: B60R 11/02

(54) **Befestigung eines mobilen Informationsgeräts in einem Fahrzeug**

(71) Anmelder: KlickTel AG, 46284 Dorsten (DE)
(72) Erfinder: Polenske, Boris, 46282 Dorsten (DE)
(74) Vertreter: Szynka, Dirk

(57) **Zusammenfassung**

Die Erfindung betrifft eine lösbare formschlüssige Verbindung zwischen einem Informationsgerät (1), insbesondere einem Navigationsgerät, und einer Halterung (6 - 17) zur Befestigung in einem Fahrzeug.

## Beschreibung

Die vorliegende Erfindung betrifft die Befestigung eines mobilen Informationsgeräts, insbesondere eines Navigationsgeräts, in einem Fahrzeug.

Navigationsgeräte für Fahrzeuge, insbesondere Kraftfahrzeuge, sind seit längerem bekannt und finden in jüngster Zeit vor allem auch im Bereich der Pkw zunehmende Verbreitung. Zum Teil handelt es sich um herstellerseitig fest eingebaute Geräte, zum Teil um separat vom Fahrzeug erworbene und während der Nutzungsdauer jederzeit vom Benutzer im Fahrzeug zu montierende und auch wieder daraus auszubauende Geräte. Solche Geräte sind nicht als festes Fahrzeugbestandteil zu betrachten und werden hier als mobile Geräte bezeichnet. I. d. R. sind sie batterieversorgt und erlauben auch eine Nutzung außerhalb des Fahrzeugs, was jedoch für die im Folgenden erläuterte Erfindung keine wesentliche Rolle spielt.

Der Erfindung richtet sich nicht nur auf Navigationsgeräte, sondern allgemeiner auf Informationsgeräte mit einem Bildschirm, beispielsweise also auch auf mobile Kleincomputer wie sog. Handheld PC, Palmtops, DVD-Spieler etc. die dem Nutzer zusätzlich oder alternativ zur Navigation auch Funktionen wie eine Terminplanung, Telefonfunktionen, Internetzugang, E-Mailfunktionen, Unterhaltungsfunktion u. Ä. anbieten können. Der Begriff des Informationsgeräts soll hierbei auch Telekommunikationsgeräte, insbesondere Mobiltelefone, beinhalten. Auch bei solchen Geräten, beispielsweise einen mobilen Kleincomputer oder einem Abspielgerät für Filme, stellt sich das Problem einer vernünftigen Befestigung in einem Fahrzeug. Dies betrifft sowohl eine Nutzung durch den Fahrer selbst, insbesondere bei einem Navigationsgerät, als auch eine Nutzung durch andere Fahrzeuginsassen.

Bei dem Fahrzeug handelt es sich i. d. R. und bei der Erfindung vorzugsweise um ein Kraftfahrzeug, insbesondere einen Pkw. Es kann sich aber in gleicher Weise auch beispielsweise um ein Sportboot mit einem Cockpit oder ein Flugzeug oder auch ein anderes Straßenfahrzeug, insbesondere ein Motorrad, handeln.

Der Erfindung liegt das Problem zugrunde, verbesserte Möglichkeiten zur Befestigung eines mobilen Informationsgeräts in einem Fahrzeug anzugeben.

Das Problem wird gelöst durch eine Informationsanzeigevorrichtung, die aufweist: ein mobiles Informationsgerät mit einem Bildschirm zur Informationsanzeige und eine mit dem Informationsgerät lösbar verbindbare Halterung zur Befestigung des Informationsgeräts in einem Fahrzeug, gekennzeichnet durch einen Formschluss der lösbaren Verbindung zwischen dem Informationsgerät und der Halterung,
sowie durch ein entsprechendes Verfahren zum Befestigen eines mobilen Informationsgeräts in einem Fahrzeug,
und durch ein entsprechend ausgelegtes mobiles Informationsgerät.

Die Grundidee der Erfindung liegt darin, für die lösbare Verbindung zwischen dem mobilen Informationsgerät und der Fahrzeughalterung einen Formschluss einzusetzen. Formschlüssige Verbindungen sind definiert durch das (formbedingte) Ineinandergreifen von mindestens zwei Verbindungspartnern. Dabei werden die Kräfte, welche durch die verschiedenen auftretenden Belastungen verursacht werden, im Wesentlichen normal zu den Flächen der beiden Verbindungspartner übertragen. Durch diese mechanische Verbindung können sich die Verbindungspartner auch ohne oder bei unterbrochener Kraftübertragung oder bei Richtungsumkehr ausgeübte Kräfte nicht lösen.

Die Erfindung soll hiermit vor allem von rein kraftschlüssigen Verbindungen unterschieden werden, die durch Druckkräfte oder Reibungskräfte in Folge geeigneter Vorspannung erzeugt werden. Bei der kraftschlüssigen Verbindung treten die zu übertragenden Kräfte nur tangential zu den beteiligten Flächen der Verbindungspartner auf, so dass die Haftreibung entscheidend ist. Hierzu zählen also insbesondere die Klemmverbindungen. Geklemmte Steckverbindungen sind jedoch üblich bei der Verbindung von mobilen Informationsgeräten mit Fahrzeughalterungen. Dabei ergibt sich die Gefahr eines unbeabsichtigten Lösens, etwa beim Fahren über ein Schlagloch oder bei anderen Erschütterungen, insbesondere auch bei Fahrzeugkollisionen. Hierdurch können nicht nur Beschädigungen des Informationsgeräts, sondern auch Gefährdungen hervorgerufen werden, etwa weil sich eine Bedienungsperson nach dem aus der Verankerung gelösten Informationsgerät bückt und deswegen oder nur aufgrund des Schreckens nicht mehr mit voller Aufmerksamkeit auf das Verkehrsgeschehen oder die Fahrzeugbedienung konzentriert ist. Auch können nicht verankerte Geräte im Fall von Fahrzeugkollisionen zu einer Personengefährdung führen.

Im Übrigen bedeutet eine verbesserte Verankerung des mobilen Informationsgeräts im Fahrzeug auch einen Komfortgewinn für den Benutzer und erlaubt es diesem, seine Aufmerksamkeit ganz unbeeinträchtigt und unbesorgt anderen Dingen als der Frage, ob das Informationsgerät "noch hält", zu widmen.

Im Prinzip sind Verbindungen zwischen der Halterung und dem Informationsgerät denkbar, die sowohl Formschlusscharakter als auch Kraftschlusscharakter haben. Dies könnte beispielsweise bei einem elastisch auslenkbaren Riegel der Fall sein, der in eine formentsprechende Ausnehmung eingreift, solange die Kontaktfläche zwischen dem Riegel und der Ausnehmung aufgrund eines stumpfen Winkels zur Bewegungsrichtung beim Lösen letztlich doch, bei entsprechend großer Kraft, ein Außereingriffbringen des Riegels durch elastische Auslenkung erlaubt. Solche Mischformen sollen bei der Erfindung mit beansprucht sein, weil sie ebenfalls durch den Formschlussanteil eine Verbesserung bewirken.

Bevorzugt sind jedoch Befestigungsvarianten, bei denen ein reiner Formschluss zwischen dem Informationsgerät und der Halterung hergestellt werden kann, der dann durch eine Kraftbeaufschlagung in der Richtung der zum Lösen notwendigen Bewegung nicht mehr zerstörungsfrei zu lösen ist. Bei dem eben erwähnten Beispiel eines Riegeleingriffs wäre dies beispielsweise der Fall bei einer senkrechten Orientierung zwischen der Kontaktfläche und der zum Lösen der Verbindung nötigen Bewegung zwischen dem Informationsgerät und der Halterung und auch bei einem entsprechenden spitzen Winkel. Zur weiteren Veranschaulichung wird auch auf das Ausführungsbeispiel verwiesen.

Bei ausreichender Eigenstabilität der mit der Verbindung in Zusammenhang stehenden Teile kann damit einerseits eine lösbare Verbindung gewährleistet sein und andererseits ein unbeabsichtigtes Öffnen praktisch ganz ausgeschlossen werden. Insbesondere ergibt sich eine weitgehende Unempfindlichkeit gegen Erschütterungen und Stöße.

Eine bevorzugte Ausführungsform für den Formschluss ist eine Bolzenverriegelung, bei der ein bolzenförmiges oder stabartiges Element durch formangepasste Löcher, Ausnehmungen oder in Hohlformen des Informationsgeräts und/oder der Halterung eingesteckt wird und damit für den nötigen Formschluss sorgt. Bei einer besonders praktischen Variante handelt es sich bei dem Bolzen um einen ohnehin für andere Zwecke erforderlichen oder zumindest nützlichen Stift, insbesondere einen Schreibstift, etwa einen Kugelschreiber, und ganz besonders bevorzugter Weise um einen Bedienstift, mit dem ein berührungsempfindlicher Bildschirm des Informationsgeräts oder besonders kleine Tasten des Informationsgeräts bedient werden können.

Dabei kann die Verriegelungsposition des Stifts gleichzeitig zu dessen regulärer Aufbewahrung dienen. Bekannte mobile Informationsgeräte mit berührungsempfindlichen Bildschirmen weisen bereits solche Bedienstifte auf und sind regelmäßig mit entsprechenden Löchern oder Ausnehmungen für deren dauerhafte und verliersichere Unterbringung ausgestattet. Wenn nun entsprechende formangepasste Elemente der Halterung in solcher Weise in eine solche Ausnehmung oder ein solches Loch des Informationsgeräts eingreifen, dass der im Informationsgerät untergebrachte Stift einen Formschluss mit Ihnen herstellt, ist eine erfindungsgemäße Verriegelung mit geringem Aufwand und großem praktischen Nutzen gegeben.

Vorzugsweise wird der Stift dabei im unteren Bereich des Gehäuses des Informationsgeräts von einer Seitenfläche aus eingesteckt. Die Seitenfläche ist vorzugsweise eine schmale Seitenfläche, die der üblicherweise größten Frontfläche, die den Bildschirm aufweist, benachbart ist. Der untere Gehäusebereich ist bevorzugt. Das Einstecken erfolgt vorzugsweise parallel zu einer der beiden unteren Gehäusekanten, also bei aufrecht stehendem Bildschirm horizontal. Zur Veranschaulichung wird wiederum auf das Ausführungsbeispiel verwiesen.

Eine erfindungsgemäße Halterung kann eine Aufnahmeplattform zum Aufsetzen des Informationsgeräts aufweisen, die vorzugsweise ungefähr rechtwinklig zu dem Bildschirm (im angesetzten Zustand des Informationsgeräts) und parallel zu den horizontalen Kanten des Informationsgeräts ausgerichtet ist. Diese Aufnahmeplattform kann dann ein Element mit einem Auge, d. h. einer Öffnung, oder auch einer Ausnehmung ohne geschlossenen Rand zum Durchstecken des Bolzens aufweisen.

An die Aufnahmeplattform kann sich in einem Winkel dazu, vorzugsweise rechtwinklig, ein weiteres Teil der Halterung anschließen, das eine Führung für das Informationsgerät aufweist. Diese Führung dient dazu, während des Aufsetzens des Informationsgeräts auf die Halterung in Richtung zu der Aufnahmeplattform einen Formschluss zwischen dem Informationsgerät und der Halterung hinsichtlich der zu der Bewegung des Aufsetzens senkrechten Richtung herzustellen. Damit kann die Aufsetzbewegung unterstützt werden, indem dieser Formschluss schon etwas vor dem Abschluss dieser Bewegung hergestellt wird und kann ferner die Stabilität der Verbindung weiter gesteigert werden.

Die Halterung kann ihrerseits dauerhaft mit dem Fahrzeug verbunden sein, ist jedoch vorzugsweise mit einer lösbaren Befestigungseinrichtung hierfür versehen. Dabei kann es sich um eine an sich bekannte Saugeinrichtung handeln, die den Vorteil einer großen Flexibilität hat und insbesondere eine Befestigung an Glasscheiben erlaubt. Im Hinblick auf die Sicherung der Gesamtbefestigung des Informationsgeräts in dem Fahrzeug vor allem in Unfallsituationen sind jedoch stabilere Verbindungen zu anderen Fahrzeugteilen als Glasscheiben vorzuziehen, zum einen weil Glasscheiben bei Unfällen häufig beschädigt werden und damit die Sicherung bereits verloren wäre, zum anderen weil die Saugbefestigung nur eine begrenzte Belastbarkeit aufweist. Auch hier sind lösbare formschlüssige Verbindungen mit Fahrzeugteilen bevorzugt. Die Einzelheiten sind jedoch nicht Gegenstand dieser Erfindung.

Die Halterung kann elektrische Kontakte für eine energieversorgungstechnische und/oder signaltechnische Verbindung mit dem Informationsgerät aufweisen. Dabei kann es sich um federnde Kontakte für einen 12 V-Versorgungsanschluss, um informationstechnische Systemsteckverbindungselemente oder andere an sich bekannte Kontaktlösungen handeln. Damit können die notwendigen Anschlüsse zwischen dem Informationsgerät und der Halterung kabellos ausgeführt werden und die Energieversorgung dann beispielsweise über ein lösbar und lose liegendes Kabel zu einer 12 V-Buchse oder auch durch eine feste Verdrahtung in dem Fahrzeug gelöst werden. Es können in gleicher Weise auch Verbindungen zu einem Radiogeräte oder dessen Steuerung hergestellt werden, etwa um das Radio stumm zu schalten oder leise zu schalten, wenn das Informationsgerät ein akustisches Signal, insbesondere eine Sprachansage, ausgeben soll. Es können auch Verkehrsfunksignale über eine Wurfantenne oder einen Anschluss an das Radio oder dessen Antenne in das Informationsgerät eingeschleift werden, indem die Kontakte zwischen Halterung und Informationsgerät genutzt werden. In jedem Fall kann das Informationsgerät mit geringem Aufwand aus der Halterung entnommen werden, ohne dass weitere Trennungen von Kabeln oder anderen Anschlüssen nötig werden.

Zur Optimierung der Ablesbarkeit des Bildschirms oder auch aus anderen Gründen sind Halterungen mit Verstellmöglichkeiten bevorzugt, insbesondere solche mit zwei zueinander senkrechten Verstellachsen.

Im Folgenden wird die Erfindung anhand eines Ausführungsbeispiels näher erläutert, das sich auf alle Aspekte und Kategorien der Erfindung bezieht. Die Einzelheiten des Ausführungsbeispiels können auch in anderen Kombinationen erfindungswesentlich sein. Auch die vorstehende Beschreibung bezieht sich in den einzelnen Merkmalen auf alle Aspekte und Kategorien der Erfindung.
- Figur 1: zeigt eine perspektivische Ansicht von vorne unten rechts auf eine erfindungsgemäße Informationsanzeigevorrichtung, wobei ein Informationsgerät und eine zugehörige Halterung fest verbunden sind.
- Figur 2: zeigt die erfindungsgemäße Informationsanzeigevorrichtung aus Figur 1 in etwas geänderter Perspektive, wobei ein Bedienstift aus dem Informationsgerät entnommen und dieses von der Halterung abgehoben ist.
- Figur 3: zeigt die Informationsanzeigevorrichtung in dem Zustand aus Figur 2 in perspektivischer Ansicht von hinten rechts.

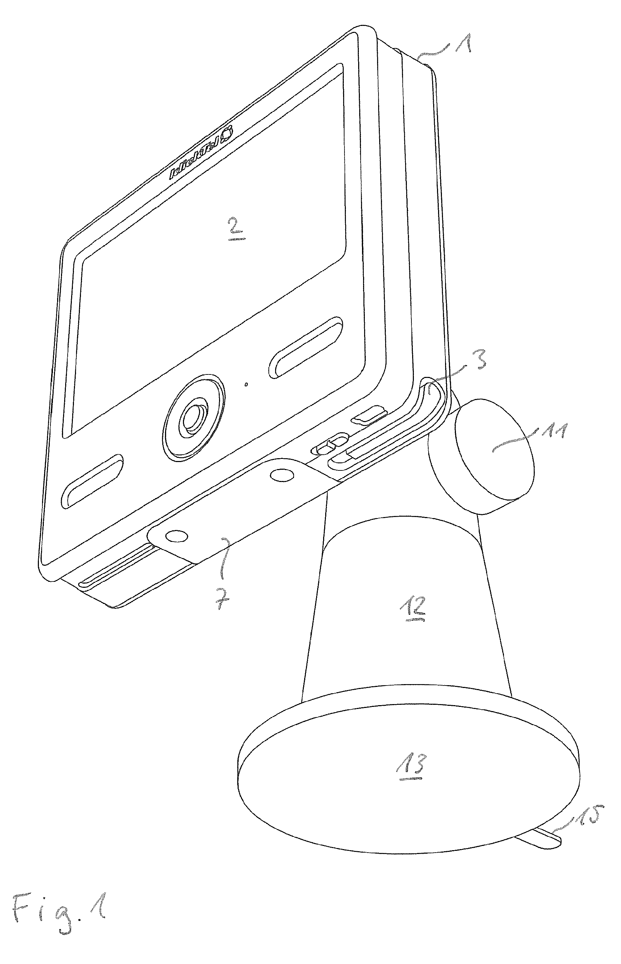

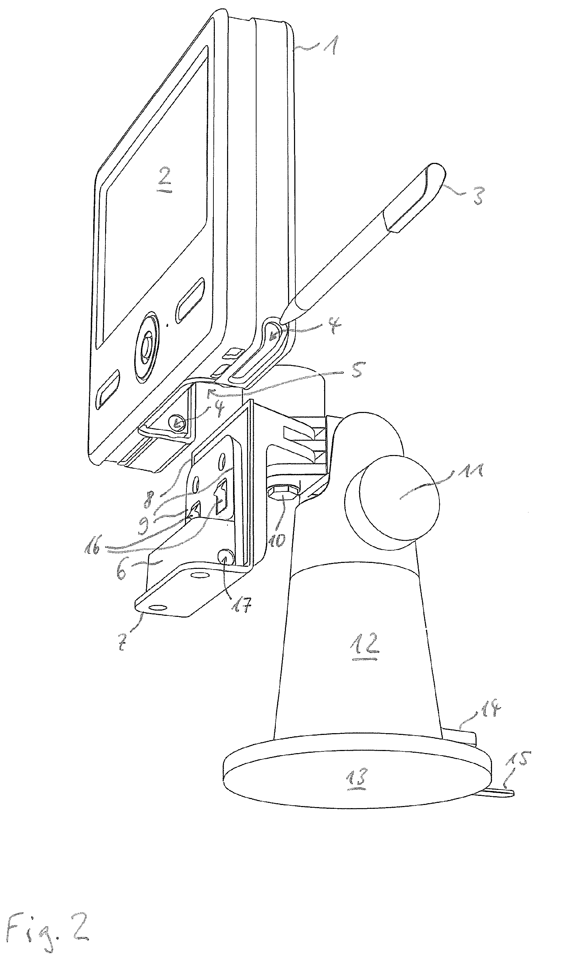

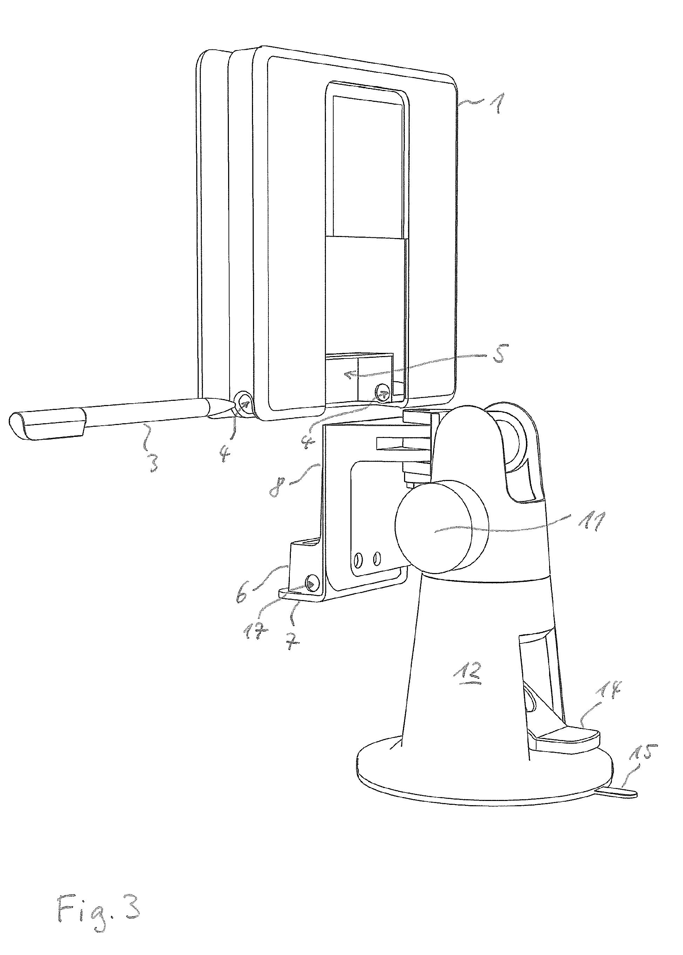

Figur 1 zeigt ein erfindungsgemäßes Informationsgerät 1, hier ein Navigationsgerät mit berührungsempfindlichem Bildschirm 2 und verschiedenen, für die Erfindung nicht weiter wesentlichen Bedienelementen. Das Informationsgerät 1 hat eine flachquaderförmige Form mit einer großen Vorderfläche und Rückseitenfläche. Von einer schmalen rechten Seitenfläche aus ist im unteren Bereich in unmittelbarer Nachbarschaft der hinteren unteren Kante ein in den Figuren 2 und 3 getrennt gezeichneter Bedienstift 3 eingesteckt. Der Bedienstift 3 ist dabei in ein horizontal durch einen Großteil der Gesamtbreite des Informationsgeräts 1 laufendes Loch 4 eingesteckt, das, wie Figur 2 am besten zeigt, im rechten Bereich eine seitliche Schlitzausnehmung für einen Clip des Bedienstiftes 3 aufweist, im linken Bereich als kreisrundes Loch weiterläuft und dazwischen durch eine im Wesentlichen quaderförmige Ausnehmung 5 an der Hinterseite und Unterseite des Informationsgeräts 1 unterbrochen ist.

Die Figuren 2 und 3 zeigen, dass in dem in Figur 1 gezeigten zusammengesetzten Zustand ein im Wesentlichen quaderförmiger Block 6 mit etwas abgerundeten Ecken in diese Ausnehmung 5 eingreift. Der Block 6 sitzt auf einer Aufnahmeplattform 7, die den unteren im Wesentlichen horizontalen Schenkel eines L-Profils bildet, dessen zweiter, im Wesentlichen vertikaler Schenkel 8 eine durch einen Hinterschnitt an Seitenkanten 9 gebildete Führungsschiene für entsprechend formangepasste Strukturen an den seitlichen Begrenzungswänden der Ausnehmung 5 des Informationsgeräts 1 trägt.

Das L-Profil ist über eine erste Schwenkverstelleinrichtung mit im Wesentlichen vertikaler Achse 10 und eine zweite Schwenkverstelleinrichtung mit im Wesentlichen horizontaler Achse 11 an einem hier nur symbolisch dargestellten Halteblock 12 befestigt. Dieser Halteblock 12 trägt bei diesem Ausführungsbeispiel eine an sich bekannte und nur schematisch angedeutete Saugbefestigungseinrichtung 13 mit einem zugehörigen Bedienhebel 14 und einer Lasche 15 zum Lösen. Die bislang erwähnten Elemente 6 bis 15 bilden eine Halterung zur Montage des Informationsgeräts 1 in einem Fahrzeug, insbesondere im Armaturenfeldbereich eines Pkw.

Die Saugbefestigungseinrichtung 13, 14, 15 ist nur stellvertretend dargestellt und, wie bereits zuvor erwähnt, nicht die einzige und auch nicht eine besonders bevorzugte Variante zur Befestigung der Halterung 6 bis 15 in einem Fahrzeug. Vielmehr steht sie hier stellvertretend für eine eigentlich bevorzugte, an einen bestimmten Fahrzeugtyp spezifisch angepasste und daher ohne Erläuterung der Einzelheiten dieser Anpassung nicht ohne weiteres zu beschreibende lösbare und formschlüssige Befestigungsmöglichkeit im Fahrzeug.

Figur 2 zeigt weiterhin an dem die Führungsschienen(kanten) 9 aufweisenden vertikalen Teil in dem L-Profil angebrachte elektrische Kontakte 16, die hier ebenfalls stellvertretend für weitere Kontakte dargestellt sind. Insbesondere trägt die (horizontale) Oberseite des quaderförmigen Blocks 6 einen an das Informationsgerät 1 angepassten signaltechnischen Systemsteckkontakt, der in dem in Figur 1 dargestellten Zustand mit einem komplementären Gegenstück in der Oberseitenwand der Ausnehmung 5 des Informationsgeräts 1 in Eingriff kommt.

Der wichtigste Teil der Erfindung besteht in dem Zusammenspiel des Bedienstifts 3, der Aufnahmeöffnung 4, der Ausnehmung 5, des zugehörigen quaderförmigen Blocks 6 und einer bisher nicht erwähnten querlaufenden Bohrung 17 durch letzteren. Durch diese Bohrung 17 greift der Bedienstift 3 in dem in Figur 1 dargestellten Zustand formschlüssig und kann durch seitliches Herausziehen daraus, und letztlich aus der Öffnung 4, entfernt werden. Dann, und nur dann sind Informationsgerät 1 und Halterung 6-17 trennbar, indem das Informationsgerät 1 entlang den Führungsschienen 9 gleitend im Wesentlichen vertikal nach oben abgezogen wird. Umgekehrt wird es durch vertikales Aufschieben bis auf die Aufnahmeplattform 7 und nachfolgendes seitliches Einstecken des Bedienstifts 3 in die Öffnung 4 und damit auch durch die Bohrung 17 montiert und gesichert. Da die Berührflächen zwischen dem als Bolzen dienendem Bedienstift 3 und den Öffnungen 4 und 17 auch senkrecht zu der vertikalen Bewegungsrichtung beim Lösen verlaufen, ist damit ein Formschluss geschaffen, der ohne Herausziehen des Bedienstifts 3 keine zerstörungsfreie Entriegelung erlaubt.

## Patentansprüche

1. Informationsanzeigevorrichtung, die aufweist:
ein mobiles Informationsgerät (1) mit einem Bildschirm (2) zur Informationsanzeige
und eine mit dem Informationsgerät (1) lösbar verbindbare Halterung (6 - 17) zur Befestigung des Informationsgeräts (1) in einem Fahrzeug,
**gekennzeichnet durch** einen Formschluss (3, 4, 17) der lösbaren Verbindung zwischen dem Informationsgerät (1) und der Halterung (6 - 17).

2. lnformationsanzeigevorrichtung nach Anspruch 1, bei der die lösbare Verbindung zwischen dem Informationsgerät (1) und der Halterung (6-17) hinsichtlich der für ein Lösen der Verbindung notwendigen Bewegung zwischen dem Informationsgerät (1) und der Halterung (6-17) durch einen reinen Formschluss (3, 4, 17) zu realisieren ist, der durch eine Kraftbeaufschlagung in Richtung der Lösebewegung nicht zerstörungsfrei zu lösen ist.

3. Informationsanzeigevorrichtung nach Anspruch 2, bei der der Formschluss (3, 4, 17) durch eine Bolzenverriegelung herzustellen ist.

4. Informationsanzeigevorrichtung nach Anspruch 3, bei der der Bolzen (3) der Bolzenverriegelung (3, 4, 17) ein in das Gehäuse des Informationsgeräts (1) einzusteckender und dadurch in die Verriegelungsposition zu bringender Schreib- oder Bedienstift (3) ist.

5. Informationsanzeigevorrichtung nach Anspruch 4, bei der der Stift (3) von einer an die den Bildschirm (2) aufweisende Frontfläche anschließenden Seitenfläche aus im unteren Bereich des Gehäuses parallel zu einer der unteren Kanten des Gehäuses einzustecken ist.

6. Informationsanzeigevorrichtung nach Anspruch 3 auch in Verbindung mit Anspruch 4 oder 5, bei der die Halterung (6-17) eine Aufnahmeplattform (7) zum Aufsetzen des Informationsgeräts (1) aufweist und an der Aufnahmeplattform (7) ein Element (6, 17) zum Durchstecken des Bolzens (3) vorgesehen ist.

7. lnformationsanzeigevorrichtung nach Anspruch 6, bei der sich an die Aufnahmeplattform in einem Winkel ein Teil (8) der Halterung (6-17) anschließt, das eine Führung (9) für das Informationsgerät (1) bildet, so dass dieses über die Führung (9) auf die Aufnahmeplattform (7) aufgesetzt werden kann und die Führung (9) dabei einen Formschluss zwischen dem Informationsgerät (1) und der Halterung (6-17) hinsichtlich einer zu der Richtung des Aufsetzens senkrechten Richtung herstellt.

8. Informationsanzeigevorrichtung nach einem der vorstehenden Ansprüche, bei der die Halterung (6 - 17) eine lösbare Befestigungseinrichtung (13-15) zur Befestigung an einem Fahrzeugteil aufweist.

9. Informationsanzeigevorrichtung nach einem der vorstehenden Ansprüche, bei der die Halterung (6-17) elektrische Kontakte (16) aufweist, die bei einer Verbindung zwischen dem Informationsgerät (1) und der Halterung (6-17) einen Anschluss an das Informationsgerät (1) herstellen.

10. Informationsanzeigevorrichtung nach einem der vorstehenden Ansprüche, bei der die Halterung (6-17) zwei zueinander senkrechte Verstellachsen (10, 11) für die Positionseinstellung des Informationsgeräts (1) aufweist.

11. Informationsanzeigevorrichtung nach einem der vorstehenden Ansprüche, die für ein Kraftfahrzeug als Fahrzeug vorgesehen ist.

12. Informationsanzeigevorrichtung nach einem der vorstehenden Ansprüche, bei der das Informationsgerät (1) ein Navigationsgerät ist.

13. Verfahren zum Befestigen eines mobilen Informationsgeräts (1) mit einem Bildschirm (2) zur Informationsanzeige in einem Fahrzeug über eine lösbar mit dem Informationsgerät (1) zu verbindende Halterung (6 - 17),
**dadurch gekennzeichnet, dass** die lösbare Verbindung zwischen dem Informationsgerät (1) und der Halterung (6 - 17) über eine formschlüssige Verriegelung (3, 4, 17) hergestellt wird.

14. Verfahren nach Anspruch 13, bei dem eine Informationsanzeigevorrichtung nach einem der Ansprüche 2-12 verwendet wird.

15. Mobiles Informationsgerät, das für ein Verfahren nach Anspruch 13 oder 14 ausgelegt ist.
